# EUROPEAN PATENT APPLICATION

(11) **EP 4 563 425 A1**
(43) Date of publication of application: **04.06.2025**
(21) Application number: 23845515.8
(22) Date of filing: 24.07.2023
(51) Int. Cl.: B60W 20/15, B60L 58/40

(54) **VEHICLE, ENERGY MANAGEMENT METHOD AND APPARATUS THEREOF, AND READABLE STORAGE MEDIUM**

(30) Priority: 25.07.2022 CN 202210877503
(71) Applicant: BYD Company Limited, Shenzhen, Guangdong 518118 (CN)
(72) Inventor: YANG, Dongsheng, Shenzhen, Guangdong 518118 (CN); ZHU, Futang, Shenzhen, Guangdong 518118 (CN); WANG, Chunsheng, Shenzhen, Guangdong 518118 (CN); SHEN, Tao, Shenzhen, Guangdong 518118 (CN); WU, Jinlong, Shenzhen, Guangdong 518118 (CN)
(74) Representative: Mathys & Squire
(86) International application number: PCT/CN2023/108980
(87) International publication number: WO 2024/022305

(57) **Abstract**

A vehicle, an energy management method and apparatus thereof, and a readable storage medium. The method comprises: obtaining a pre-travelling road of a vehicle, at least one prediction working condition being identified according to working condition data on the pre-travelling road; determining, according to working condition data corresponding to each prediction working condition, a battery SOC change range of the vehicle operating under each prediction working condition; determining a plurality of battery SOC change paths of the vehicle on the pre-travelling road according to the battery SOC change range of the vehicle travelling under each prediction working condition; and performing energy management on the vehicle according to the battery SOC change path with minimum operation energy consumption among the plurality of battery SOC change paths.

## Description

### CROSS-REFERENCE TO RELATED APPLICATIONS

The present disclosure claims priority to Chinese Patent Application No. 202210877503.1, filed on July 25, 2022 and entitled "VEHICLE, ENERGY MANAGEMENT METHOD THEREFOR AND ENERGY MANAGEMENT APPARATUS THEREOF, AND READABLE STORAGE MEDIUM". The entire content of the above-referenced application is incorporated herein by reference.

### FIELD

The present disclosure relates to the field of vehicle technologies, and in particular, to an energy management method for a vehicle, an energy management apparatus of a vehicle, a computer-readable storage medium, and a vehicle.

### BACKGROUND

To properly manage an energy coupling system with multiple power sources, a current hybrid vehicle allocates power or torques of the multiple power sources and coordinates mechanical braking and electric energy recovery by providing an energy management control strategy. In this way, on the basis of ensuring power, security, and comfort of a vehicle, system efficiency is improved, and energy-saving and emission-reduction performance of the vehicle is improved.

The energy management strategy of whole vehicle control is mainly based on meeting a power requirement, maintaining a battery SOC (State Of Charge, state of charge) and system work efficiency as a control criterion. When the vehicle is operating, driving efficiency of the system is improved according to the energy management control strategy by properly allocating power of each power source and combining efficiency characteristics of the power sources. In the related art, energy control is performed by using the energy management strategy only according to an operating condition of the vehicle. As a result, optimal control cannot be achieved, and it is difficult to achieve optimal system driving efficiency.

### SUMMARY

The present disclosure is intended to resolve at least one of the technical problems in the related art to some extent. Therefore, a first objective of the present disclosure is to provide an energy management method for a vehicle. In the method, a predicted condition is identified according to condition data of a planned-traveling road on which the vehicle is, and energy management is performed on the vehicle according to an SOC variation path corresponding to minimum energy consumption in the predicted condition, so that optimal system operating efficiency in different predicted conditions can be achieved, and ultimately, global optimum of a driving condition of a user can be achieved.

A second objective of the present disclosure is to provide an energy management apparatus of a vehicle.

A third objective of the present disclosure is to provide a computer-readable storage medium.

A fourth objective of the present disclosure is to provide a vehicle.

To achieve the foregoing objectives, an example of a first aspect of the present disclosure provides an energy management method for a vehicle, including: A planned-traveling road of the vehicle is acquired, where the planned-traveling road is identified, according to condition data of the planned-traveling road, to be in at least one predicted condition; a battery SOC variation range of the vehicle when operating under each of the predicted conditions is determined according to condition data corresponding to each of the predicted conditions; multiple battery SOC variation paths of the vehicle on the planned-traveling road are determined according to the battery SOC variation range of the vehicle when operating under each of the predicted conditions; and energy management is performed on the vehicle according to a battery SOC variation path that is among the multiple battery SOC variation paths and that minimizes operation energy consumption of the vehicle on the planned-traveling road.

According to the energy management method for a vehicle in this example of the present disclosure, the predicted condition is identified according to the condition data of the planned-traveling road on which the vehicle is, and energy management is performed on the vehicle according to the battery SOC variation path corresponding to minimum energy consumption in the predicted condition, so that optimal system operating efficiency in different time windows or predicted conditions can be achieved, and ultimately, global optimum of a driving condition of a user can be achieved.

Additionally, the energy management method for a vehicle according to the foregoing example of the present disclosure may further have the following additional technical characteristics.

According to an example of the present disclosure, the condition data includes: slope data and speed limit data. A method for determining the at least one predicted condition includes: The planned-traveling road is divided into at least one road section according to the condition data; a historical traveling parameter of the at least one road section is acquired, and road parameter data is determined according to the historical traveling parameter, where the road parameter data includes: at least one of an average vehicle speed, an average acceleration, an average uphill slope, an average downhill slope, a vehicle speed standard deviation, and an acceleration standard deviation; the road parameter data is matched with road parameter data of multiple predicted conditions; and the planned-traveling road of the vehicle is identified to be a predicted condition or a combination of multiple conditions when the matching is successful .

According to an example of the present disclosure, a battery SOC variation range in a first predicted condition of the planned-traveling road is determined according to an actual battery SOC of the vehicle at a start point of the planned-traveling road and condition data of the first predicted condition. A battery SOC variation range in a non-first predicted condition of the planned-traveling road is determined according to condition data of the non-first predicted condition and a battery SOC variation range in a previous predicted condition of the non-first predicted condition.

According to an example of the present disclosure, an upper limit of the battery SOC variation range in the predicted condition is a battery SOC of the vehicle when the vehicle ends operating in the predicted condition in a power generation mode. A lower limit of the battery SOC variation range in the predicted condition is a battery SOC of the vehicle when the vehicle ends operating in the predicted condition in a pure electric mode.

According to an example of the present disclosure, that a battery SOC variation path among the multiple battery SOC variation paths of the vehicle on the planned-traveling road is determined includes: A target SOC value is selected in the battery SOC variation range in each of the predicted conditions; and the battery SOC variation path among the multiple battery SOC variation paths is obtained according to each target SOC value.

According to an example of the present disclosure, multiple battery SOC variation paths are reacquired when a difference between an actual battery SOC in a current predicted condition and a battery SOC in a corresponding SOC variation path corresponding to minimum energy consumption is greater than a set threshold or when the planned-traveling road of the vehicle changes.

According to an example of the present disclosure, that condition data of the planned-traveling road on which the vehicle is is acquired includes: A start position and an end position at which the vehicle is planned to travel are determined; and condition data from the start position to the end position is acquired.

To achieve the foregoing objectives, an example of a second aspect of the present disclosure provides an energy management apparatus of a vehicle, including: an acquisition module, configured to acquire a planned-traveling road of the vehicle, the planned-traveling road being identified, according to condition data of the planned-traveling road, to be in at least one predicted condition; a second determining module, configured to determine, according to condition data corresponding to each of the predicted conditions, a battery SOC variation range of the vehicle when operating under each of the predicted conditions; a third determining module, configured to determine multiple battery SOC variation paths of the vehicle on the planned-traveling road according to the battery SOC variation range of the vehicle when operating under each of the predicted conditions; and an energy management module, configured to perform energy management on the vehicle according to a battery SOC variation path that is among the multiple battery SOC variation paths and that minimizes operation energy consumption of the vehicle on the planned-traveling road.

According to the energy management apparatus of a vehicle in this example of the present disclosure, the predicted condition is identified according to the condition data of the planned-traveling road on which the vehicle is, and energy management is performed on the vehicle according to the battery SOC variation path corresponding to minimum energy consumption in the predicted condition, so that optimal system operating efficiency in different time windows or predicted conditions can be achieved, and ultimately, global optimum of a driving condition of a user can be achieved.

To achieve the foregoing objectives, an example of a third aspect of the present disclosure further provides a computer-readable storage medium, storing an energy management program of a vehicle. When the energy management program of the vehicle is executed by a processor, the energy management method for a vehicle is implemented.

According to the computer-readable storage medium in this example of the present disclosure, according to the energy management method for a vehicle, optimal system operating efficiency in different time windows or predicted conditions can be achieved, and ultimately, global optimum of a driving condition of a user can be achieved.

To achieve the foregoing objectives, an example of a fourth aspect of the present disclosure further provides a vehicle, including a memory, a processor, and an energy management program of a vehicle stored in the memory and can be run on the processor. When the energy management program of the vehicle is executed by the processor, the energy management method for a vehicle is implemented.

According to the vehicle in this example of the present disclosure, according to the energy management method for a vehicle, optimal system operating efficiency in different time windows or predicted conditions can be achieved, and ultimately, global optimum of a driving condition of a user can be achieved.

The additional aspects and advantages of the present disclosure are provided in the following descriptions, some of which may become apparent from the following descriptions or may be learned from practices of the present disclosure.

### BRIEF DESCRIPTION OF THE DRAWINGS

FIG. 1 is a schematic block diagram of an energy management method for a vehicle according to an example of the present disclosure;
FIG. 2 is a schematic diagram of predicted condition division according to an example of the present disclosure;
FIG. 3 is a schematic diagram of a battery SOC variation path according to an example of the present disclosure;
FIG. 4 is a flowchart of an energy management method for a vehicle according to a specific example of the present disclosure;
FIG. 5 is a schematic diagram of comparison of an energy management method for a vehicle according to a specific example of the present disclosure;
FIG. 6 is a schematic block diagram of an energy management apparatus of a vehicle according to an example of the present disclosure; and
FIG. 7 is a schematic block diagram of a vehicle according to an example of the present disclosure.

### DETAILED DESCRIPTION

Examples of the present disclosure are described in detail below, and examples of examples are shown in accompanying drawings, where the same or similar elements or the elements having same or similar functions are denoted by the same or similar reference numerals throughout the description. Examples described below with reference to the accompanying drawings are examples, and are intended to explain the present disclosure and cannot be construed as a limitation to the present disclosure.

An energy management method for a vehicle, an energy management apparatus of a vehicle, a computer-readable storage medium, and a vehicle provided in examples of the present disclosure are described with reference to the accompanying drawings.

In the related art, when a vehicle is operating, an objective of implementing an energy management control strategy is mainly to meet a power requirement, maintain an SOC, and efficiency of a component and a system. A working state of a power system is controlled and adjusted, for example, an engine operating speed and a working torque are controlled and adjusted, so that system work efficiency is improved and vehicle fuel consumption is reduced. Although the system work efficiency is improved according to the energy management strategy by optimizing and adjusting the system working state, a driving condition requirement of a user is not considered, and the system working state cannot be planned according to the driving condition of the user. Only system work efficiency in a current transient state is optimized, resulting in suboptimal fuel economy and global optimum in an entire driving condition cannot be achieved. To resolve the foregoing problem, the present disclosure provides an energy management method for a vehicle.

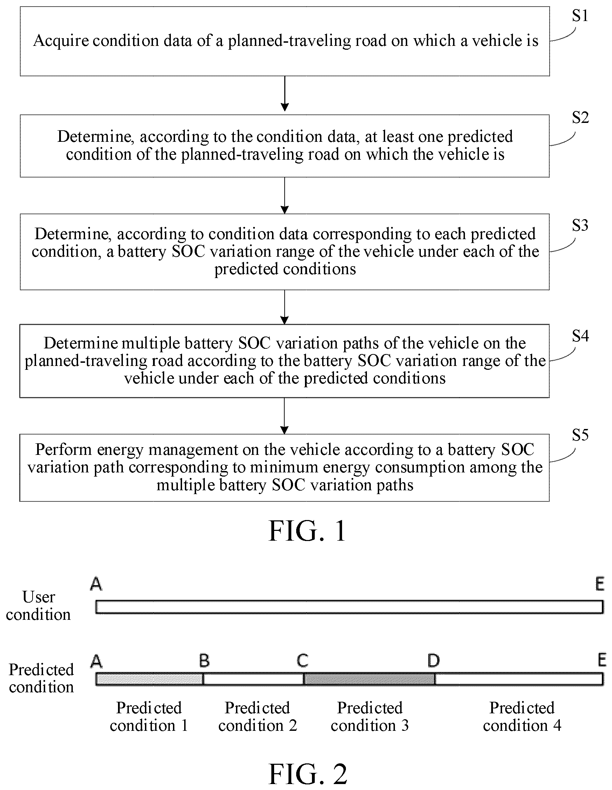

FIG. 1 is a schematic block diagram of an energy management method for a vehicle according to an example of the present disclosure.

As shown in FIG. 1, the energy management method for a vehicle in this example of the present disclosure may include:
S1: Condition data of a planned-traveling road on which the vehicle is acquired.
S2: At least one predicted condition of the planned-traveling road on which the vehicle is determined according to the condition data.
S3: A battery SOC variation range of the vehicle when operating under each of the predicted conditions is determined according to condition data corresponding to each of the predicted conditions.
S4: Multiple battery SOC variation paths of the vehicle on the planned-traveling road are determined according to the battery SOC variation range of the vehicle when operating under each of the predicted conditions.
S5: Energy management is performed on the vehicle according to a battery SOC variation path corresponding to minimum operation energy consumption among the multiple battery SOC variation paths.

For example, according to a positioning signal of a global navigation system, high-precision map data, 4G/5G data of intelligent networking, and the like, a map of a planned-driving road of a user is acquired, so that condition data of the planned-driving road is acquired, such as a road condition vehicle speed, slope, and other signal data. The planned-driving road is identified to be in different predicted conditions according to big data analysis, a battery SOC variation range in each of the predicted conditions is calculated, and the multiple battery SOC variation paths are planned within the battery SOC variation range. Energy consumption of each battery SOC variation path is calculated, a battery SOC variation path corresponding to minimum energy consumption is used as an optimal battery SOC variation path in the predicted condition, and energy management is performed on the vehicle according to the battery SOC variation path. By analogy, an optimal battery SOC variation path in each of the predicted conditions of the planned-driving road may be obtained, and a battery SOC may be balanced and planned according to a current battery state of charge, to plan and control battery power to achieve global optimum in an entire driving condition.

It should be noted that, the planned-traveling road of the vehicle may be confirmed according to a start point and an end point on a map selected by a user, or the planned-traveling road of the vehicle may be predicted and determined according to a current position and a traveling direction of the vehicle, which may be set specifically according to actual conditions.

In an example of the present disclosure, that condition data of a planned-traveling road on which the vehicle is acquired includes: A start position and an end position at which the vehicle is planned to travel are determined; and condition data from the start position to the end position is acquired.

For example, assuming that a user needs to drive from a point A to a point E, the user first selects positions of the start point A and the end point E in a map interface of a terminal display. The map generates multiple driving roads according to the start point A and the end point E, and displays the multiple driving roads to the user. The user selects one of the driving roads as a planned-driving road, and then acquires condition data of the planned-driving road of the vehicle from the point A to the point E. As shown in FIG. 2, statistical analysis is performed on the road condition data, to identify that a driving condition corresponding to a segment AB is a predicted condition 1, a driving condition corresponding to a segment BC is a predicted condition 2, a driving condition corresponding to a segment CD is a predicted condition 3, and a driving condition corresponding to a segment DE is a predicted condition 4. Therefore, through this method, a segment AE of a vehicle traveling road condition is converted into a predicted condition combination of a segment AB (a predicted condition 1)+a segment BC (a predicted condition 2)+a segment CD (a predicted condition 3)+a segment DE (a predicted condition 4).

According to an example of the present disclosure, the condition data includes: slope data and speed limit data, and that at least one predicted condition of the vehicle on a planned-traveling road is determined according to the condition data includes: The planned-traveling road is divided into at least one road section according to the condition data; a historical traveling parameter of the at least one road section is acquired, and road parameter data is determined according to the historical traveling parameter, where the road parameter data includes: at least one of an average vehicle speed, an average acceleration, an average uphill slope, an average downhill slope, a vehicle speed standard deviation, and an acceleration standard deviation; the road parameter data is matched with road parameter data of multiple predicted conditions; and the planned-traveling road of the vehicle is identified to be a predicted condition or a combination of multiple conditions when the matching is successful.

Specifically, in the present disclosure, the vehicle traveling road conditions are first divided into 16 representative predicted conditions, such as a severe urban congestion condition, a moderate urban congestion condition, a mild urban congestion condition, an urban expressway condition, a highway condition, a suburban condition, and a mountain road condition, and road parameter data corresponding to each of the predicted conditions is saved.

After the user determines the planned-traveling road according to the map on the terminal screen , the condition data corresponding to the planned-traveling road can be automatically retrieved according to the planned-traveling road, for example, signal data such as speed limit and slope. Then statistical analysis is performed on the condition data, and the planned-traveling road is divided into several road sections according to the condition data. A speed, an acceleration, and other data of historical vehicles when passing a road corresponding to the condition data are then acquired according to big data analysis. Then, a corresponding average vehicle speed, an average acceleration, a vehicle speed standard deviation, an acceleration standard deviation, and other parameter data can be calculated according to a basic calculation formula by using the vehicle speed and acceleration retrieved from big data. By comparing and identifying the calculated road parameter data corresponding to the vehicle and road parameter data corresponding to a pre-stored predicted condition, the road parameter data of the predicted condition corresponding to the condition data of the vehicle on the planned-traveling road is determined, in other words, the predicted condition corresponding to the condition data is identified, so that several representative predicted conditions, which may be one predicted condition or a combination of multiple predicted conditions, are identified according to the condition data of the planned-traveling road of the vehicle.

It should be noted that, the condition data determined according to the planned-traveling road may be acquired according to road planning. For example, assuming that the acquired condition data of the planned-traveling road includes speed limit data of 60 Km/h and speed limit data of 80 Km/h, in this case, the planned-traveling road may be divided into a road section a corresponding to the speed limit data of 60 Km/h and a road section b corresponding to the speed limit data of 80 Km/h. For example, the road parameter data includes: an average vehicle speed, an average acceleration, a vehicle speed standard deviation, and an acceleration standard deviation. First, according to big data analysis, a speed, an acceleration, and other traveling parameter data of historical vehicles when traveling through the road section a are obtained, and an average vehicle speed, an average acceleration, a vehicle speed standard deviation, and an acceleration standard deviation of vehicles when passing the road section a are calculated according to an average calculation formula and a standard deviation calculation formula, and then are compared with the road parameter data corresponding to the pre-stored predicted condition. When the calculated road parameter data is within a preset road parameter data range, a predicted condition corresponding to preset road parameter data is determined to be a predicted condition corresponding to the road section a. By analogy, a predicted condition corresponding to the road section b can be obtained. It may be understood that the predicted conditions corresponding to the road section a and the road section b may be the same or different. In other words, the planned-traveling road may be pre-segmented according to the condition data of the planned-traveling road, and then predicted conditions corresponding to pre-segmented road sections are acquired according to the determined historical traveling parameter, so that all predicted conditions corresponding to the planned-traveling road are obtained.

It should be noted that, the foregoing is only a possible implementation of the present disclosure, which may be set specifically according to actual conditions. For example, the historical traveling parameter may further include a traveling parameter of a vehicle currently traveling on a road section. This is not limited herein.

It should be further noted that, the road parameter data is used for identification and division of predicted conditions. Generally, road parameter data in different predicted conditions is significantly different, which may be specifically combined and set according to actual conditions.

In an example of the present disclosure, that a battery SOC variation range of the vehicle when operating under each of the predicted conditions is determined according to condition data corresponding to each of the predicted conditions includes: A current actual battery SOC of the vehicle is acquired; a battery SOC variation range of the vehicle when operating under a first predicted condition is determined according to the current actual battery SOC of the vehicle and condition data that corresponds to the first predicted condition and that is determined according to a traveling direction of the vehicle; and for each of the predicted conditions other than the first predicted condition in at least one predicted condition, the battery SOC variation range of the vehicle when operating under each of the predicted conditions is determined according to the condition data corresponding to the predicted condition and a battery SOC variation range corresponding to a previous predicted condition of the predicted condition.

In other words, battery consumption of the vehicle in the first predicted condition is calculated according to the condition data of the vehicle in the first predicted condition, and a battery SOC of the vehicle at the end of the first predicted condition is predicted according to the current actual battery SOC of the vehicle, so that the battery SOC change rang in the first predicted condition is determined. In addition, an initial battery SOC in a second predicted condition is determined according to the battery SOC variation range in the first predicted condition, and a battery SOC of the vehicle at the end of the second predicted condition is calculated with reference to predicted battery consumption in the second predicted condition, so that a battery variation range in the second predicted condition is determined. By analogy, an initial battery SOC of a third predicted condition is determined according to the battery variation range in the second predicted condition, so that a battery SOC variation range in each of the predicted conditions of the planned-traveling road is determined.

In an example of the present disclosure, that a battery SOC variation range of the vehicle when operating under a first predicted condition is determined according to the current actual battery SOC of the vehicle and condition data that corresponds to the first predicted condition and that is determined according to a traveling direction of the vehicle includes: A first SOC is determined according to the actual battery SOC and the condition data corresponding to the first predicted condition, where the first SOC is a battery SOC when the vehicle ends operating in the first predicted condition in a power generation mode; a second SOC is determined according to the actual battery SOC and the condition data corresponding to the first predicted condition, where the second SOC is a battery SOC when the vehicle ends operating in the first predicted condition in a pure electric mode; and the battery SOC variation range of the vehicle when operating under the first predicted condition is obtained by using the first SOC as an upper limit of the battery SOC and the second SOC as a lower limit of the battery SOC.

That the battery SOC variation range of the vehicle when operating under each of the predicted conditions is determined according to the condition data corresponding to the predicted condition and a battery SOC variation range corresponding to a previous predicted condition of the predicted condition includes: A third SOC is determined according to the condition data corresponding to the predicted condition and the battery SOC variation range corresponding to the previous predicted condition, where the third SOC is a battery SOC when the vehicle ends operating in the predicted condition in the power generation mode; a fourth SOC is determined according to the condition data corresponding to the predicted condition and the battery SOC variation range corresponding to the previous predicted condition, where the fourth SOC is a battery SOC when the vehicle ends operating in the predicted condition in the pure electric mode; and the battery SOC variation range of the vehicle when operating under each of the predicted conditions is obtained by using the third SOC as an upper limit of the battery SOC and the fourth SOC as a lower limit of the battery SOC.

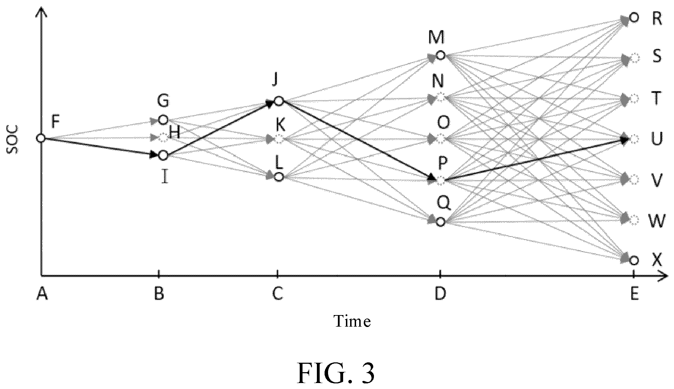

For example, the predicted condition division shown in FIG. 2 is still used as an example. The first predicted condition is the predicted condition 1 corresponding to the segment AB. As shown in FIG. 3, an initial battery SOC of the vehicle at a point A is F. A first SOC at a point B is determined to be G when the vehicle is in a pure power generation mode, to be specific, the vehicle uses only fuel in a predicted condition 1 from the point A to the point B, and a battery is in a charging state. In other words, an upper limit of the battery SOC in the predicted condition 1 is G. A second SOC at the point B is determined to be I when the vehicle is in a pure electric mode, to be specific, the vehicle uses only electricity in the predicted condition 1 from the point A to the point B, and the battery is in a discharging state. In other words, a lower limit of the battery SOC in the predicted condition 1 is I. Therefore, a battery variation range in the predicted condition 1 can be determined to be [I, G]. Assuming that an actual battery SOC F in the predicted condition 1 is 70%, and the upper limit G of the battery SOC at the point B is 75%, the lower limit I of the battery SOC is 65%, the battery SOC variation range in the predicted condition 1 is [65%, 75%].

Then, a battery SOC variation range of the vehicle in a predicted condition 2 is determined according to condition data corresponding to the predicted condition 2 and a battery SOC variation range corresponding to a previous predicted condition of the predicted condition 2, that is, the predicted condition 1. First, the upper limit G of the battery SOC in the predicted condition 1 is used as an initial battery SOC in the predicted condition 2. A third SOC at a point C is determined to be J when the vehicle is in the pure power generation mode, to be specific, the vehicle uses only fuel in the predicted condition 2, and the battery is in the charging state. In other words, an upper limit of the battery SOC in the predicted condition 2 is J. Then, the lower limit I of the battery SOC in the predicted condition 1 is used as an initial battery SOC in the predicted condition 2. A fourth SOC at the point C is determined to be L when the vehicle is in the pure electric mode, to be specific, the vehicle uses only electricity in the predicted condition 2 from the point B to the point C, and the battery is in the discharging state. In other words, a lower limit of the battery SOC in the predicted condition 2 is L. Therefore, a battery SOC variation range in the predicted condition 2 is determined to be [L, J].

In an example of the present disclosure, that a battery SOC variation path among the multiple battery SOC variation paths of the vehicle on the planned-traveling road is determined includes: A target SOC value is selected in the battery SOC variation range corresponding to each of the predicted conditions; and the battery SOC variation path among the multiple battery SOC variation paths is obtained according to each target SOC value.

Specifically, still referring to FIG. 2 and FIG. 3. The initial battery SOC at the point A is F. It is assumed that a point H is selected as the target SOC value within the battery SOC variation range [I, G], then F-H is a battery SOC variation path in the predicted condition 1.

As shown in FIG. 3, in addition to the point H within the battery SOC variation range, a target SOC value of the segment AB corresponding to the predicted condition 1 further includes the upper limit G of the battery SOC and the lower limit I of the battery SOC. In this case, there may be three battery SOC variation paths in the segment AB corresponding to the predicted condition 1: F-G, F-H, and F-I. The initial battery SOC of the segment BC corresponding to the predicted condition 2 may be the target SOC value of the segment AB, including G, H, and I. A preset reference battery SOC of the segment BC includes J, K, and L. In this case, there may be nine SOC variation paths in the segment BC: G-J, G-K, G-L, H-J, H-K, H-L, I-J, I-K, and I-L. By analogy, there may be fifteen battery SOC variation paths in the segment CD corresponding to the predicted condition 3, and there may be thirty SOC variation paths in the segment DE corresponding to the predicted condition 4. According to the foregoing content, it may be learned that there may be 3×9×15×30=12150 SOC variation paths in a condition of a current traveling road AE of the vehicle.

It should be noted that, a large quantity of target SOC values in each of the predicted conditions indicates more generated battery SOC variation paths, higher accuracy of determining the battery SOC variation path corresponding to minimum energy consumption in the predicted condition, and a better energy management effect of the vehicle.

According to an example of the present disclosure, that the SOC variation path corresponding to minimum energy consumption is acquired among the multiple battery SOC variation paths includes: Fuel consumption and electricity consumption corresponding to each battery SOC variation path are acquired; and a battery SOC variation path corresponding to minimum fuel consumption and electricity consumption is used as a target battery SOC variation path.

To be specific, fuel consumption and electricity consumption corresponding to different battery SOC variation paths are obtained through calculation, the battery SOC variation path corresponding to minimum fuel consumption and electricity consumption is selected as an optimal battery SOC variation path by comparison, and the optimal battery SOC variation path is used as the target battery SOC variation path in the predicted condition, to control the vehicle for energy management. As shown in FIG. 3, the predicted condition 1 corresponding to the segment AB is used as an example, fuel consumption and electricity consumption corresponding to the battery SOC variation paths F-G, F-H, and F-I are acquired respectively, and it is calculated that the fuel consumption and electricity consumption corresponding to the battery SOC variation path F-I are minimum. Therefore, the battery SOC variation path F-I is used as a target battery SOC variation path of the segment AB, and I is an optimal battery SOC at the end of the predicted condition 1. By analogy, a target SOC variation path of the segment BC is determined to be I-J, a target SOC variation path of the segment CD is determined to be J-P, and a target SOC variation path of the segment DE is determined to be P-U. Therefore, a target battery SOC variation path in the planned-traveling road AE is determined to be F-I-J-P-U.

According to an example of the present disclosure, the energy management method for a vehicle further includes: Multiple battery SOC variation paths are reacquired when a difference between an actual battery SOC in a current predicted condition and a battery SOC in a corresponding SOC variation path corresponding to minimum energy consumption is greater than a set threshold or when the planned-traveling road of the vehicle changes. The set threshold may be set according to actual conditions.

Specifically, the acquired battery SOC in the optimal path is used as an optimal battery SOC for each of the predicted conditions, in other words, in a user condition, fuel consumption and energy consumption are minimum and global efficiency is optimal. FIG. 3 is used as an example, a SOC variation path corresponding to minimum energy consumption of the segment AB is F-I, and the optimal battery SOC of the segment AB is I. Assuming that the set threshold is 2%, an actual battery SOC of the vehicle when arriving at the point B is acquired, and the actual battery SOC is compared with I. When a difference ΔSOC between the actual battery SOC and I is greater than 2%, the actual battery SOC is used as the initial battery SOC of the segment BC, and multiple battery SOC variation paths are reacquired. An optimal battery SOC variation path is determined through energy consumption comparison, and energy management is performed on the vehicle according to the optimal battery SOC variation path. If a difference ΔSOC between the actual battery SOC of the vehicle and I is less than or equal to 2%, the vehicle operation is controlled according to the battery SOC variation path corresponding to the minimum energy consumption acquired initially, in other words, IJ is used as the battery SOC variation path of the segment BC to perform energy management on the vehicle.

In addition, if the condition data of the planned-driving road of the user is acquired according to the positioning signal of the global navigation system, high-precision map data, 4G/5G data of intelligent networking, and the like, and a driving route changes, condition data may be reacquired and battery SOC variation path planning may be re-performed.

Further, considering a large amount of calculation in an actual vehicle software program, in the present disclosure, combined calculation of known predicted conditions may be completed in a simulation platform, the battery SOC variation path is input into a vehicle controller as energy management planning strategy logic, and the optimal battery SOC variation path is planned and selected automatically after the current traveling road condition of the vehicle is identified, so that the calculation amount and calculation time of the vehicle controller are reduced, which is simple and easy.

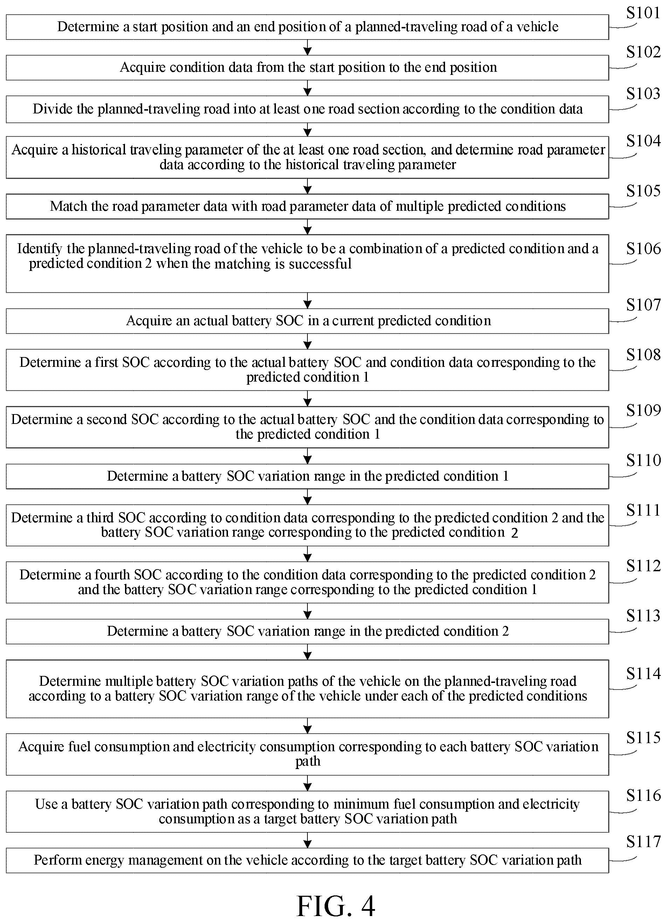

In a specific example of the present disclosure, an example in which a planned-traveling road is identified to be in a predicted condition 1 and a predicted condition 2 is used as an example. As shown in FIG. 4, the energy management method of a vehicle may include the following steps.

S101: A start position and an end position of the planned-traveling road of the vehicle are determined.

S102: Condition data from the start position to the end position is acquired.

S103: The planned-traveling road is divided into at least one road section according to the condition data.

S104: A historical traveling parameter of the at least one road section is acquired, and road parameter data is determined according to the historical traveling parameter.

S105: The road parameter data is matched with road parameter data of multiple predicted conditions.

S106: The planned-traveling road of the vehicle is identified to be a combination of the predicted condition 1 and the predicted condition 2 when the matching is successful.

S107: An actual battery SOC in a current predicted condition is acquired.

S108: A first SOC is determined according to the actual battery SOC and condition data corresponding to the predicted condition 1.

S109: A second SOC is determined according to the actual battery SOC and the condition data corresponding to the predicted condition 1.

S110: A battery SOC variation range in the predicted condition 1 is determined.

S111: A third SOC is determined according to condition data corresponding to the predicted condition 2 and the battery SOC variation range corresponding to the predicted condition 1.

S112: A fourth SOC is determined according to the condition data corresponding to the predicted condition 2 and the battery SOC variation range corresponding to the predicted condition 1.

S113: A battery SOC variation range of the vehicle when operating under the predicted condition 2 is determined.

S114: Multiple battery SOC variation paths of the vehicle on the planned-traveling road are determined according to a battery SOC variation range of the vehicle when operating under each of the predicted conditions.

S115: Fuel consumption and electricity consumption corresponding to each battery SOC variation path are acquired.

S116: A battery SOC variation path corresponding to minimum fuel consumption and electricity consumption is used as a target battery SOC variation path.

S117: Energy management is performed on the vehicle according to the target battery SOC variation path.

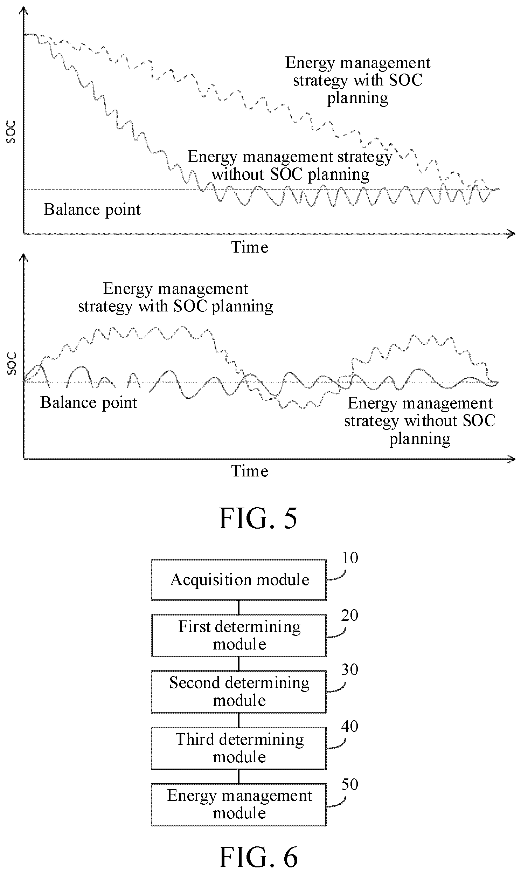

Further, the energy management method for a vehicle is used as an energy management strategy with SOC planning to plan the battery SOC of the vehicle. A comparison schematic diagram as shown in FIG. 5 is provided. The energy management strategy with SOC planning is to use SOC control implemented by the energy management method in the present disclosure, and the energy management strategy without SOC planning is to use SOC control implemented by using an energy management method in the related art. In the present disclosure, traveling conditions of the vehicle are divided into different predicted conditions according to a predicted battery SOC intelligent planning energy management control strategy, the battery SOC is balanced and planned according to the predicted conditions and the current battery state of charge, and battery power is controlled according to a current energy management strategy for a driving need of a driver and SOC planning, so that optimal system operating efficiency in different time windows or predicted conditions can be achieved, and ultimately, global optimum of a driving condition of a user can be achieved.

In conclusion, according to the energy management method for a vehicle in this example of the present disclosure, first, the condition data of the planned-traveling road on which the vehicle is acquired, at least one predicted condition of the planned-traveling road on which the vehicle is determined according to the condition data, the battery SOC variation range of the vehicle in each of the predicted conditions is determined according to the condition data corresponding to each of the predicted conditions, the multiple battery SOC variation paths of the vehicle on the planned-traveling road are determined according to the battery SOC variation range of the vehicle in each of the predicted conditions, and then energy management is performed on the vehicle according to the battery SOC variation path corresponding to minimum energy consumption among the multiple battery SOC variation paths. Therefore, in the method, the predicted condition is identified according to the condition data of the planned-traveling road on which the vehicle is, and energy management is performed on the vehicle according to the battery SOC variation path corresponding to minimum energy consumption in the predicted condition, so that optimal system operating efficiency in different time windows or predicted conditions can be achieved, and ultimately, global optimum of a driving condition of a user can be achieved.

Corresponding to the foregoing examples, the present disclosure further provides an energy management apparatus of a vehicle.

As shown in FIG. 6, the energy management apparatus of a vehicle in this example of the present disclosure may include: an acquisition module 10, a first determining module 20, a second determining module 30, a third determining module 40, and an energy management module 50.

The acquisition module 10 is configured to acquire condition data of a planned-traveling road on which the vehicle is. The first determining module 20 is configured to determine, according to the condition data, at least one predicted condition of the planned-traveling road on which the vehicle is. The second determining module 30 is configured to determine, according to condition data corresponding to each of the predicted conditions, a battery SOC variation range of the vehicle when operating under each of the predicted conditions. The third determining module 40 is configured to determine multiple battery SOC variation paths of the vehicle on the planned-traveling road according to the battery SOC variation range of the vehicle when operating under each of the predicted conditions. The energy management module 50 is configured to perform energy management on the vehicle according to a battery SOC variation path corresponding to minimum operation energy consumption among the multiple battery SOC variation paths.

According to an example of the present disclosure, the condition data includes: slope data and speed limit data. The first determining module 20, configured to determine, according to the condition data, at least one predicted condition of the planned-traveling road on which the vehicle is specifically configured to: divide the planned-traveling road into at least one road section according to the condition data; acquire a historical traveling parameter of the at least one road section, and determine road parameter data according to the historical traveling parameter, where the road parameter data includes: at least one of an average vehicle speed, an average acceleration, an average uphill slope, an average downhill slope, a vehicle speed standard deviation, and an acceleration standard deviation; match the road parameter with road parameter data of multiple predicted conditions; and identify the planned-traveling road of the vehicle to be a predicted condition or a combination of multiple conditions when the matching is successful.

In an example of the present disclosure, the second determining module 30, configured to determine a battery SOC variation range of the vehicle when operating under the first predicted condition according to a current actual battery SOC of the vehicle and condition data that is corresponding to the first predicted condition and that is determined according to a traveling direction of the vehicle is specifically configured to: determine a first SOC according to the actual battery SOC and the condition data corresponding to the first predicted condition, where the first SOC is a battery SOC when the vehicle ends operating in the first predicted condition in a power generation mode; determine a second SOC according to the actual battery SOC and the condition data corresponding to the first predicted condition, where the second SOC is a battery SOC when the vehicle ends operating in the first predicted condition in a pure electric mode; and obtain, by using the first SOC as an upper limit of the battery SOC and the second SOC as a lower limit of the battery SOC, the battery SOC variation range of the vehicle when operating under the first predicted condition.

The second determining module 30, configured to determine, according to the condition data corresponding to the predicted condition and a battery SOC variation range corresponding to a previous predicted condition of the predicted condition, the battery SOC variation range of the vehicle when operating under the predicted condition is specifically configured to: determine a third SOC according to the condition data corresponding to the predicted condition and the battery SOC variation range corresponding to the previous predicted condition, where the third SOC is a battery SOC when the vehicle ends operating in the predicted condition in the power generation mode; determine a fourth SOC according to the condition data corresponding to the predicted condition and the battery SOC variation range corresponding to the previous predicted condition, where the fourth SOC is a battery SOC when the vehicle ends operating in the predicted condition in the pure electric mode; and obtain, by using the third SOC as an upper limit of the battery SOC and the fourth SOC as a lower limit of the battery SOC, the battery SOC variation range of the vehicle when operating under the predicted condition.

According to an example of the present disclosure, the third determining module 40, configured to determine a battery SOC variation path among the multiple battery SOC variation paths of the vehicle on the planned-traveling road is specifically configured to: select a target SOC value in the battery SOC variation range corresponding to each of the predicted conditions; and obtain the battery SOC variation path among the multiple battery SOC variation paths according to each target SOC value.

According to an example of the present disclosure, the third determining module 40 is further configured to: reacquire multiple battery SOC variation paths when a difference between an actual battery SOC in a current predicted condition and a battery SOC in a corresponding battery SOC variation path corresponding to minimum energy consumption is greater than a set threshold or when the planned-traveling road of the vehicle changes.

According to an example of the present disclosure, the energy management method for a vehicle further includes: Multiple battery SOC variation paths are reacquired when a difference between an actual battery SOC in a current predicted condition and a battery SOC in a corresponding SOC variation path corresponding to minimum energy consumption is greater than a set threshold or when the planned-traveling road of the vehicle changes.

According to an example of the present disclosure, that the acquisition module 10 acquires condition data of the planned-traveling road on which the vehicle is includes: A start position and an end position at which the vehicle is planned to travel are determined; and condition data from the start position to the end position is acquired.

It should be noted that, for details not disclosed in the energy management apparatus of a vehicle in this example of the present disclosure, refer to the details disclosed in the energy management method for a vehicle in the foregoing examples of the present disclosure. Details are not described herein again.

In conclusion, according to the energy management apparatus of a vehicle in this example of the present disclosure, the acquisition module acquires the condition data of the planned-traveling road on which the vehicle is, the first determining module determines at least one predicted condition of the planned-traveling road on which the vehicle is according to the condition data, the second determining module determines the battery SOC variation range of the vehicle in each of the predicted conditions according to the condition data corresponding to each of the predicted conditions, the third determining module determines the multiple battery SOC variation paths of the vehicle on the planned-traveling road according to the battery SOC variation range of the vehicle in each of the predicted conditions, and the energy management module performs energy management on the vehicle according to the battery SOC variation path corresponding to minimum energy consumption among the multiple battery SOC variation paths. Therefore, the apparatus identifies the predicted condition according to the condition data of the planned-traveling road on which the vehicle is, and performs energy management on the vehicle according to the battery SOC variation path corresponding to minimum energy consumption in the predicted condition, so that optimal system operating efficiency in different time windows or predicted conditions can be achieved, and ultimately, global optimum of a driving condition of a user can be achieved.

Corresponding to the foregoing examples, the present disclosure further provides a computer-readable storage medium.

The computer-readable storage medium in this example of the present disclosure stores an energy management program of a vehicle. When the energy management program of the vehicle is executed by a processor, the energy management method for a vehicle is implemented.

According to the computer-readable storage medium in this example of the present disclosure, according to the energy management method for a vehicle, optimal system operating efficiency in different time windows or predicted conditions can be achieved, and ultimately, global optimum of a driving condition of a user can be achieved.

Corresponding to the foregoing examples, the present disclosure further provides a vehicle.

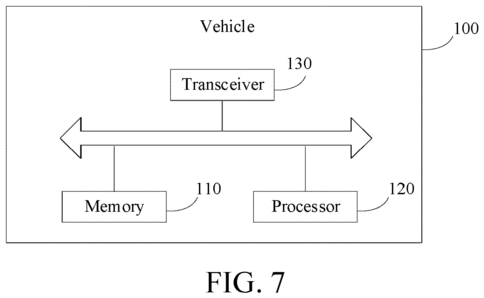

As shown in FIG. 7, the vehicle 100 in this example of the present disclosure includes a memory 110, a processor 120, and an energy management program of a vehicle stored in the memory 110 and can be run on the processor 120. When the processor 120 executes the energy management program of the vehicle, the energy management method for a vehicle is implemented.

For example, the processor 120 may be configured to perform the foregoing method examples according to instructions in the computer program.

In some examples of the present disclosure, the processor 120 may include but is not limited to:
a general-purpose processor, a digital signal processor (Digital Signal Processor, DSP), an application-specific integrated circuit (Application Specific Integrated Circuit, ASIC), a field-programmable gate array (Field Programmable Gate Array, FPGA), or another programmable logic device, a discrete gate or a transistor logic device, a discrete hardware component, or the like.

In some examples of the present disclosure, the memory 110 includes but is not limited to:
a volatile memory and/or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) serving as an external cache. Through illustrative but not limited description, RAMs in many forms, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (synch link DRAM, SLDRAM), and a direct rambus random access memory (Direct Rambus RAM, DRRAM), are available.

In some examples of the present disclosure, the computer program may be divided into one or more modules. The one or more modules are stored in the memory 110 and executed by the processor 120 to complete the method provided in the present disclosure. The one or more modules may be a series of computer program instruction segments that can complete specific functions, and the instruction segments are used to describe an execution process of the computer program in the vehicle 100.

As shown in FIG. 7, the vehicle 100 may further include:
a transceiver 130. The transceiver 130 may be connected to the processor 120 or the memory 110.

The processor 120 may control the transceiver 130 to communicate with another device. For example, the transceiver 130 may send information or data to another device or receive information or data sent by another device. The transceiver 130 may include a transmitter and a receiver. The transceiver 130 may further include an antenna. There may be one or more antennas.

It should be understood that the components of the vehicle 100 are connected via a bus system. The bus system includes not only a data bus but also a power supply bus, a control bus, and a state signal bus.

According to the vehicle in this example of the present disclosure, according to the energy management method for a vehicle, optimal system operating efficiency in different time windows or predicted conditions can be achieved, and ultimately, global optimum of a driving condition of a user can be achieved.

It should be noted that, logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, parts of the present disclosure can be implemented by using hardware, software, firmware, or a combination thereof. In the foregoing implementations, multiple steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the description of this specification, the description of the reference terms "an example", "some examples", "an example", "a specific example", "some examples," and the like means that specific features, structures, materials or characteristics described in combination with the example(s) or example(s) are included in at least one example or example of the present disclosure. In this specification, exemplary descriptions of the foregoing terms do not necessarily refer to the same example or example. In addition, the described specific features, structures, materials, or characteristics may be combined in a proper manner in any one or more of the examples or examples.

In addition, the terms "first" and "second" are used merely for description, and shall not be understood as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means at least two, for example, two or three. In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art may understand specific meanings of the terms in the present disclosure according to specific situations. Although examples of the present disclosure have been shown and described above, it can be understood that, the foregoing examples are exemplary and should not be understood as limitation to the present disclosure. A person of ordinary skill in the art can make changes, modifications, replacements, or variations to the foregoing examples within the scope of the present disclosure.

## Claims

1. An energy management method for a vehicle, comprising:
acquiring a planned-traveling road of the vehicle, the planned-traveling road being identified, according to condition data of the planned-traveling road, to be in at least one predicted condition;
determining, according to condition data corresponding to each of the predicted conditions, a battery SOC variation range of the vehicle when operating under each of the predicted conditions;
determining a plurality of battery SOC variation paths of the vehicle on the planned-traveling road according to the battery SOC variation range of the vehicle under each of the predicted conditions; and
performing energy management on the vehicle according to a battery SOC variation path that is among the plurality of battery SOC variation paths and that minimizes operation energy consumption of the vehicle on the planned-traveling road.

2. The method according to claim 1, wherein the condition data comprises: slope data and speed limit data, and a method for determining the at least one predicted condition comprises:
dividing the planned-traveling road into at least one road section according to the condition data;
acquiring a historical traveling parameter of the at least one road section, and determining road parameter data according to the historical traveling parameter, wherein the road parameter data comprises: at least one of an average vehicle speed, an average acceleration, an average uphill slope, an average downhill slope, a vehicle speed standard deviation, and an acceleration standard deviation;
matching the road parameter data with road parameter data of a plurality of predicted conditions; and
identifying the planned-traveling road of the vehicle to be a predicted condition or a combination of a plurality of conditions when the matching is successful .

3. The method according to claim 1, wherein a battery SOC variation range in a first predicted condition of the planned-traveling road is determined according to an actual battery SOC of the vehicle at a start point of the planned-traveling road and condition data of the first predicted condition; and a battery SOC variation range in a non-first predicted condition of the planned-traveling road is determined according to condition data of the non-first predicted condition and a battery SOC variation range in a previous predicted condition of the non-first predicted condition.

4. The method according to claim 3, wherein an upper limit of the battery SOC variation range in the predicted condition is a battery SOC of the vehicle when the vehicle ends operating in the predicted condition in a power generation mode; and a lower limit of the battery SOC variation range in the predicted condition is a battery SOC of the vehicle when the vehicle ends operating in the predicted condition in a pure electric mode.

5. The method according to claim 3, wherein determining a battery SOC variation path among the plurality of battery SOC variation paths of the vehicle on the planned-traveling road comprises:
selecting a target SOC value in the battery SOC variation range in each of the predicted conditions; and
obtaining the battery SOC variation path among the plurality of battery SOC variation paths according to each target SOC value.

6. The method according to claim 1, further comprising:
reacquiring a plurality of battery SOC variation paths when a difference between an actual battery SOC in a current predicted condition and a battery SOC in a corresponding SOC variation path corresponding to minimum energy consumption is greater than a set threshold or when the planned-traveling road of the vehicle changes.

7. The method according to claim 1, wherein acquiring condition data of the planned-traveling road on which the vehicle is comprises:
determining a start position and an end position at which the vehicle is planned to travel; and
acquiring condition data from the start position to the end position.

8. An energy management apparatus of a vehicle, comprising:
an acquisition module, configured to acquire a planned-traveling road of the vehicle, the planned-traveling road being identified, according to condition data of the planned-traveling road, to be in at least one predicted condition;
a second determining module, configured to determine, according to condition data corresponding to each of the predicted conditions, a battery SOC variation range of the vehicle under each of the predicted conditions;
a third determining module, configured to determine a plurality of battery SOC variation paths of the vehicle on the planned-traveling road according to the battery SOC variation range of the vehicle under each of the predicted conditions; and
an energy management module, configured to perform energy management on the vehicle according to an SOC variation path that is among the plurality of SOC variation paths and that minimizes operation energy consumption of the vehicle on the planned-traveling road.

9. A computer-readable storage medium, storing an energy management program of a vehicle, and the energy management program of the vehicle, when executed by a processor, implementing the energy management method for a vehicle according to any of claims 1 to 7.

10. A vehicle, comprising a memory, a processor, and an energy management program of a vehicle stored in the memory and can be run on the processor, and the energy management program of the vehicle, when executed by the processor, implementing the energy management method for a vehicle according to any one of claims 1 to 7.
